# EUROPÄISCHE PATENTANMELDUNG

(11) **EP 2 568 248 A2**
(43) Veröffentlichungstag der Anmeldung: **13.03.2013**
(21) Anmeldenummer: 12183341.2
(22) Anmeldetag: 06.09.2012
(51) Int. Cl.: F28D 9/00, F28F 3/02, B23K 1/00

(54) **Verfahren zur Herstellung von Plattenwärmetauschern**

(30) Priorität: 07.09.2011 DE 102011112512
(71) Anmelder: Umicore AG & Co. KG, 63457 Hanau-Wolfgang (DE)
(72) Erfinder: Schnee, Daniel, 63505 Langenselbold (DE); Zenk, Claus, 71229 Leonberg (DE)

(57) **Zusammenfassung**

Verfahren zur Herstellung von Plattenwärmetauschern mit mehreren gestapelten Strömungswannen (100), wobei jede Strömungswanne (100) einen umlaufenden Rand (102) und einen Boden (101) aufweist, benachbarte Platten zumindest teilweise miteinander verbunden sind, die Platten durch Löten miteinander verbunden werden und die Böden (101) der Strömungswannen (100) als Wärmetauscherplatten abwechselnd jeweils einen Durchflußraum für ein erstes und ein zweites Medium aufspannen, und wobei zwischen den Wärmetauscherplatten Strömungsleiteinrichtungen (103) angeordnet sind, wobei nur die jeweils miteinander zu verbindenden Teile der Strömungswannen mit Lot versehen sind, insbesondere mit einer Lotpaste.

## Beschreibung

Die Erfindung stellt ein Verfahren zur Herstellung von Wärmetauschern, wie in Ölkühlern, bereit. Plattenwärmetauscher sind in zahlreichen Varianten bekannt. AT 407 920 zeigt eine Ausführungsform von Plattenwärmetauschern, die durch Ineinanderstapeln von Strömungswannen erhalten werden können. Das Verbinden der Strömungswannen miteinander und das Abdichten gegenüber der Umwelt und benachbarter Strömungswege voneinander wird oft durch Löten bewirkt. Hierzu kann ein Blech bzw. eine Folie aus Lotmaterial eingelegt und die Strömungswannen alternierend mit den Folien ineinander gestapelt werden. Durch eine anschließende Wärmebehandlung wird die Verlötung bewirkt. Da die Wärmetauscherplatten jedoch nicht vollflächig belotet werden müssen ist diese Vorgehensweise nicht in jeder Hinsicht befriedigend. Die vorliegende Erfindung hat die Aufgabe, ein Verfahren zur Herstellung von Plattenwärmetauschern bereit zu stellen, welches eine vollflächige Belotung vermeidet.

### Kurze Beschreibung der Erfindung

Diese Aufgabe wird gelöst durch Verfahren nach den folgenden Punkten:
1. Verfahren zur Herstellung von Plattenwärmetauschern mit mehreren gestapelten Strömungswannen, wobei jede Strömungswanne einen umlaufenden Rand und einen Boden aufweist, benachbarte Platten zumindest teilweise miteinander verbunden sind, die Platten durch Löten miteinander verbunden werden und die Böden der Strömungswannen als Wärmetauscherplatten abwechselnd jeweils einen Durchflußraum für ein erstes und ein zweites Medium aufspannen, und wobei zwischen den Wärmetauscherplatten Strömungsleiteinrichtungen angeordnet sind, wobei nur die jeweils miteinander zu verbindenden Teile der Strömungswannen mit Lot versehen sind, insbesondere mit einer Lotpaste.
2. Verfahren nach Punkt 1 zur Herstellung von Plattenwärmetauschern mit mehreren gestapelten Strömungswannen, wobei jede Strömungswanne einen umlaufenden Rand und einen Boden aufweist, benachbarte Platten zumindest teilweise miteinander verbunden sind und die Böden der Strömungswannen als Wärmetauscherplatten abwechselnd jeweils einen Durchflußraum für ein erstes und ein zweites Medium aufspannen, und zwischen den Wärmetauscherplatten Strömungsleiteinrichtungen angeordnet sind, enthaltend die Schritte
   - Bereitstellen der Strömungswannen;
   - Gleichzeitiges oder sequentielles Auftragen von Lotpaste auf die Strömungsleiteinrichtungen, erhabener Teile der Strömungswannen und den Rand durch Walzenauftrag, Tauchbeschichtung, Besprühen mit Lotpaste oder deren Kombinationen;
   - Gegebenenfalls Einlegen der Strömungsleiteinrichtungen in Strömungswannen;
   - Stapeln der Strömungswannen;
   - Wärmebehandlung der beloteten, gestapelten Strömungswannen zum Verlöten der Strömungswannen.
3. Verfahren nach Punkt 1 oder 2, wobei die Strömungswannen im Wesentlichen wannenförmig gestaltet sind und ineinander gestapelt werden.
4. Verfahren nach Punkt 1, 2 oder 3, wobei die Strömungswannen abwechselnd über den Rand und über erhabene Teile der Strömungswannen miteinander verbunden sind.
5. Verfahren nach einem oder mehreren der Punkte 1 bis 4, wobei die Strömungsleiteinrichtungen abwechselnd eingelegt und über erhabene Teile der Strömungswannen gebildet werden.
6. Verfahren nach einem oder mehreren der Punkte 1 bis 5, wobei der Auftrag von Lotpaste auf die erhabenen Teile der Strömungswannen und/oder die Strömungsleiteinrichtungen durch Walzenauftrag mit Lotpaste, der Auftrag von Lotpaste auf den Rand durch Tauchbeschichten oder Besprühen mit Lotpaste erfolgt.
7. Verfahren nach einem oder mehreren der Punkte 1 bis 6 zur Herstellung von Plattenwärmetauschern mit mehreren ineinander gestapelten Strömungswannen, wobei jede Strömungswanne einen umlaufenden Rand und einen Boden aufweist, im Wesentlichen wannenförmig gestaltet ist, benachbarte Platten jeweils über die umlaufenden Ränder verbunden sind und die Böden der Strömungswannen als Wärmetauscherplatten abwechselnd jeweils einen Durchflußraum für ein erstes und ein zweites Medium aufspannen, und zwischen den Wärmetauscherplatten Strömungsleiteinrichtungen angeordnet sind, enthaltend die Schritte
   - Bereitstellen der Strömungswannen;
   - Gleichzeitiges oder sequentielles Auftragen von Lotpaste auf die Strömungsleiteinrichtungen und erhabener Teile der Strömungswannen durch Walzenauftrag (Roller Coating);
   - Auftragen von Lotpaste auf zumindest einen Teil des umlaufenden Randes durch Tauchbeschichtung oder Besprühen mit Lotpaste;
   - Gegebenenfalls Einlegen von Strömungsleiteinrichtungen in Strömungswannen;
   - Ineinanderstapeln der Strömungswannen;
   - Wärmebehandlung der beloteten, ineinander gestapelten Strömungswannen zum Verlöten der Strömungswannen.
8. Verfahren zur Herstellung von Plattenwärmetauschern nach einem oder mehreren der Punkte 1 bis 7 mit mehreren gestapelten Strömungswannen, wobei jede Strömungswanne einen umlaufenden Rand und einen Boden aufweist, benachbarte Platten zumindest teilweise miteinander verbunden sind und die Böden der Strömungswannen als Wärmetauscherplatten abwechselnd jeweils einen Durchflußraum für ein erstes und ein zweites Medium aufspannen, und zwischen den Wärmetauscherplatten Strömungsleiteinrichtungen angeordnet sind, enthaltend die Schritte
   - Bereitstellen der Strömungswannen, die je einen Boden, umlaufenden Rand, der in einem Winkel zur Fläche des Bodens angeordnet ist und einen Teilbereich aufweist, der parallel zur Fläche des Bodens angeordnet ist;
   - Gleichzeitiges oder sequentielles Auftragen von Lotpaste auf die Strömungsleiteinrichtungen, erhabener Teile der Strömungswannen und den Rand durch Walzenauftrag, Tauchbeschichtung, Besprühen mit Lotpaste oder deren Kombinationen;
   - Gegebenenfalls Einlegen der Strömungsleiteinrichtungen in Strömungswannen;
   - Stapeln der Strömungswannen durch Aufeinandersetzen, so daß die Teilbereiche der Böden, die parallel zur Fläche des Bodens angeordnet sind, aufeinander gesetzt werden und die Außenseiten der Böden der so verbundenen Strömungswannen voneinander abgewandt sind;
   - Wärmebehandlung der beloteten, gestapelten Strömungswannen zum Verlöten der Strömungswannen.
9. Verfahren nach einem oder mehreren der Punkte 1 bis 8, wobei die Strömungsleiteinrichtungen und/oder die erhabenen Teile der Strömungswannen nach dem Walzenauftrag von Lotpaste vor der Weiterverarbeitung getrocknet werden.
10. Verfahren nach Punkt 8, wobei die Strömungswannen nicht ineinander gestapelt sind.
11. Verfahren nach Punkt 8, wobei die Strömungswannen abwechselnd über den Rand und über erhabene Teile der Strömungswannen miteinander verbunden sind.
12. Verfahren nach Punkt 11, wobei die erhabenen Teile der Strömungswannen Strömungsleiteinrichtungen sind.
13. Verfahren nach einem oder mehreren der Punkte 1 bis 12, wobei das Ineinanderstapeln der Strömungswannen zu einem Zeitpunkt vorgenommen wird, an welchem die am umlaufenden Rand oder den Teilbereichen der Böden, die parallel zur Fläche des Bodens angeordnet sind und durch Tauchen oder Sprühen aufgebrachte Lotpaste nicht getrocknet ist.
14. Verfahren nach einem oder mehreren der Punkte 1 bis 13, wobei die Lotpaste 80 Gew.-% bis 95 Gew.-% Lotpulver, 6 Gew.-% bis 16 Gew.-% Lösungsmittel, 0,5 Gew.-% bis 1,5 Gew.-% eines oder mehrerer Polymere enthält.
15. Verfahren nach einem oder mehreren der Punkte 1 bis 14, insbesondere nach Anspruch 13, wobei die Lotpaste für die Tauchbeschichtung weniger als 90 Gew.-% Lotpulver, bis zu 0,7 Gew.-% eines oder mehrerer Polymere und 13 Gew.-% bis 16 Gew.-% Lösungsmittel enthält.
16. Verfahren nach einem oder mehreren der Punkte 1 bis 15, insbesondere Anspruch 13, wobei die Lotpaste für den Walzenauftrag mehr als 86 Gew.-% Lotpulver, mehr als 0,7 Gew.-%, insbesondere 0,7 Gew.-% bis 1,6 Gew.-% eines oder mehrerer Polymere und 10 bis 13 Gew.-% Lösungsmittel enthält.
17. Verfahren nach einem oder mehreren der Punkte 1 bis 16, insbesondere nach den Ansprüchen 13 bis 15, wobei das Lösungsmittel einen Siedepunkt von 60°C bis 260°C, insbesondere von 140°C bis 160°C aufweist.
18. Verfahren nach einem oder mehreren der Punkte 1 bis 17, wobei die Lotpasten für Tauch- und Walzenauftrag gleich oder verschieden sind und ein Eisen-, Kupfer- oder Nickelbasislot enthalten.
19. Verfahren nach Punkt 18, wobei die enthaltenen Lote ausgewählt sind aus der Gruppe bestehend aus Cu99,9, Cu99,95, Cu86,5Cu₂O, Cu-Al0,01P0,075, CuNi2,5-3,5Bi0,02-0,05, CuSn5,5-7,0P0,01-0, CuSn11-13P0,01-0,4, Ni60Cr30P6Si4, NiCo0,1Cr13-15Si4-5B2,75-3,5Fe4-5C0,06-0,09P0-0,02, NiCo0,1Cr13-15Si4-5B2,75-3,5Fe4-5C0-0,6P0-0,02, NiCo0,1Cr13,5-16,5B3,25-4Fe0-1,5C0-0,06P0-0,02, Ni-Co0,1Cr6-8Si4-5B2,75-3,5Fe2,5-3,5C0-0,06P0-0,02, NiCo0,1Si4-5B2,75-3,5Fe0-0,5C0-0,06P0-0,02, NiCo0,1S13-4B1,5-2,2Fe0-1,5C0-0,06P0-0,02, NiCo0,1Cr18,5-19,5Si9,75-10,5B0-0,03,C0-0,06P0-0,02, NiCo0,1Cr21-23Si6-7B0-0,01C0-0,16P3,5-4,5, NiCo0,1Cr18,5-19,5Si7-7,5B1-1,5Fe0-0,5C0-0,1P0-0,02, NiCo1Cr14,5-15,5Si7-7,5B1,1-1,6Fe0-1C0-0,06P0-0,02, NiCo0,1Cr10-13Si3-4B2-3Fe2,5-4,5C0,4-0,55P0-0,02W15-17, NiCo0,1Cr9-11,75Si3,35-4,25B2,2-3,1Fe2,5-4C0,3-0,5P0-0,02W11,5-12,75, NiCo0,1C0-0,06P10-12, NiCo0,1Cr13-15Si0-0,1B0-0,02Fe0-0,2C0-0,06P9,7-10,5Mn0-0,04, NiCo0,1Cr24-26Si0-0,01B0-0,02Fe0-0,2C0-0,06P9-11 und deren Kombinationen.
20. Verfahren nach einem oder mehreren der Punkte 1 bis 19, wobei die Wärmebehandlung in mehreren Temperaturstufen durchgeführt wird, um Trocknung, Entbinderung und Verlötung der Lotpaste zu bewirken.
21. Verfahren nach einem oder mehreren der Punkte 1 bis 20, wobei die Strömungsleiteinrichtungen ausgewählt sind aus der Gruppe bestehend aus tiefgezogenen Rippen, geprägten Rippen, gestanzten Rippen, Turbulenzeinlagen oder deren Kombinationen.
22. Verfahren nach einem oder mehreren der Punkte 1 bis 21, wobei die Lotpaste eine oder mehrere als Lot geeignete Metallpulver, ein oder mehrere Copolymere, welche mindestens einen Styrol-Block und mindestens einen Block aus Ethylen, Propylen, Isopren, Butadien, deren hydrierten Äquivalenten oder deren Kombinationen aufweist, und ein organisches Medium enthält
23. Verfahren nach Punkt 22, wobei das organische Medium ein bei Raumtemperatur flüssiger Kohlenwasserstoff oder Kohlenwasserstoffgemisch ist.
24. Verfahren nach einem oder mehreren der Punkte 22 bis 23, wobei der Kohlenwasserstoff mindestens ein Alkan mit 10 bis 15 Kohlenstoffatomen ist.
25. Verfahren nach einem oder mehreren der Punkte 22 bis 24, wobei der Kohlenwasserstoff mindestens ein Isoalkan mit 10 bis 15 Kohlenstoffatomen enthält.
26. Verfahren nach einem oder mehreren der Punkte 22 bis 25, wobei der Kohlenwasserstoff ein Gemisch aus Alkanen, Isoalkanen cyclischen Alkanen oder deren Kombinationen mit 10 bis 15 Kohlenstoffatomen ist.
27. Verfahren nach einem oder mehreren der Punkte 22 bis 26, wobei das Copolymer ein Blockcopolymer aus Styrol und Isopren oder ein Blockcopolymer aus Styrol, Ethylen und Propylen ist.
28. Verfahren nach einem oder mehreren der Punkte 22 bis 27, wobei das als Lot geeignete Metallpulver ein Metallpulver mit einer Schmelztemperatur von 1500°C oder weniger ist.
29. Verfahren nach einem oder mehreren der Punkte 22 bis 28 enthaltend 0,5 Gew.-% bis 1,5 Gew.-% des Copolymers.
30. Verfahren nach einem oder mehreren der Punkte 22 bis 29, enthaltend mindestens ein weiteres Polymer, welches von dem Copolymer verschieden ist.
31. Verfahren nach einem oder mehreren der Punkte 22 bis 30, enthaltend 6 Gew.-% bis 16 Gew.-% des organischen Mediums.
32. Verfahren nach einem oder mehreren der Punkte 1 bis 31, wobei die Lotpaste Zusatz- und Hilfsstoffe ausgewählt aus der Gruppe bestehend aus Oxidationsmittel, nichtflüchtige, sauerstoffhaltige Verbindungen, organische Oxide, organische Peroxide, Polyether, Thixotropiermittel und deren Kombinationen enthält.
33. Verfahren nach einem oder mehreren der Punkte 22 bis 33, wobei das Copolymer SEPS (Poly(Styrol-block-Isopren-block-Styrol))ist.
34. Verfahren nach einem oder mehreren der Punkte 22 bis 34, wobei das Copolymer einen Styrolgehalt von mindestens 30 %, insbesondere 25% aufweist.
35. Verfahren nach einem oder mehreren der Punkte 22 bis 35, wobei das Copolymer ein SEPS ist und ein Verhältnis von Styrol zu Isopren von etwa 1:2 bis etwa 1:6 aufweist.
36. Verfahren nach einem oder mehreren der Punkte 22 bis 35, wobei das Copolymer ein Gewichtsmittel M_{w} von 60000 g/mol bis 90000 g/mol aufweist.
37. Verfahren nach einem oder mehreren der Punkte 22 bis 36, wobei das Copolymer ein Zahlenmittel Mₙ von 60000 g/mol bis 90000 g/mol aufweist.
38. Plattenwärmetauscher, erhältlich nach einem Verfahren nach einem oder mehreren der Punkte 1 bis 37.

### Detaillierte Beschreibung der Erfindung

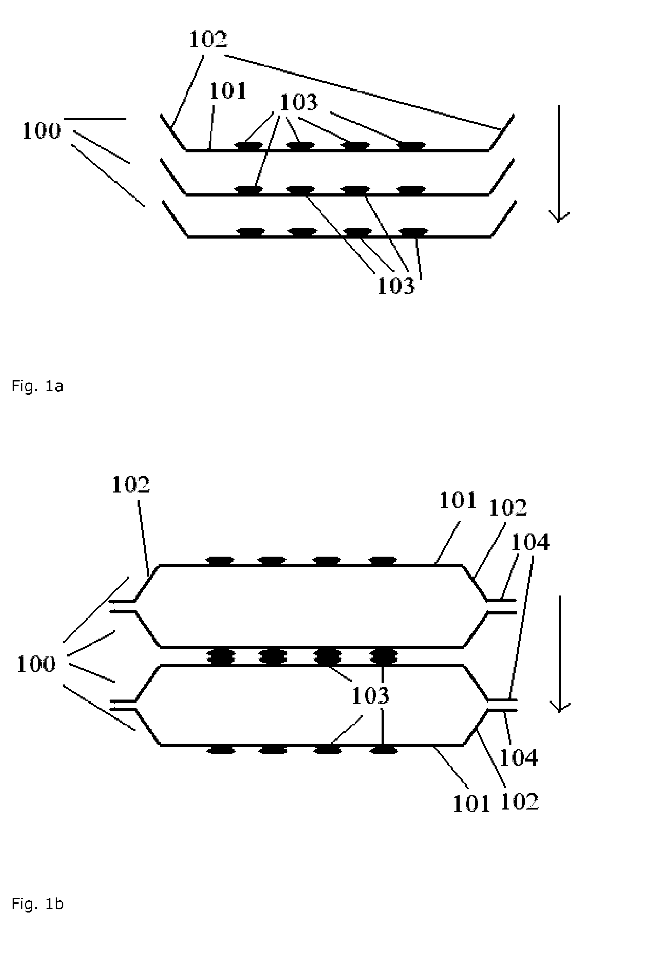

Bei dem Verfahren zur Herstellung von Plattenwärmetauschern mit mehreren gestapelten Strömungswannen 100 weist jede Strömungswanne 100 einen umlaufenden Rand 102 und einen Boden 101 auf. Der Rand 102 kann in einem Winkel zur Fläche des Bodens 101 angeordnet sein, so daß die Wannen ineinander gestapelt werden können, wobei die Strömungsleiteinrichtungen 103 zwischen den Böden der Strömungswannen (welche die Platten des Wärmetauschers bilden) angeordnet sind, wie in Figur 1a gezeigt.

In einer anderen Ausführungsform der Erfindung weist der umlaufende Rand neben dem Teilbereich 102, der in einem Winkel zur Fläche des Bodens 101 angeordnet ist, einen Teilbereich 104 auf, der parallel zur Fläche des Bodens angeordnet ist. Diese Ausführung erlaubt ein Aufeinandersetzen der Strömungswannen 100 derart, daß die Böden der Strömungswannen 101 voneinander abgewandt und nicht ineinander gestapelt sind. Zwischen den miteinander verbundenen Wärmetauscherplatten 101 befinden sich die Strömungsleiteinrichtungen 103. Diese Vorgehensweise ist insbesondere geeignet um Plattenwärmetauscher herzustellen, welche von einem Gehäuse umgeben sind, durch welche ein Medium zum Wärmetausch zugeführt wird, oder wenn ein Wärmeaustausch mit der Umgebung erwünscht ist.

In beiden Ausführungsformen der Erfindung spannen die Böden der Strömungswannen als Wärmetauscherplatten abwechselnd jeweils einen Durchflußraum für ein erstes und ein zweites Medium auf. Zwischen den Wärmetauscherplatten können in einer weiteren Ausführungsform der Erfindung Strömungsleiteinrichtungen, wie tiefgezogene, gestanzte oder geprägte Rippen, aber auch als gesonderte Bauteile hergestellte Turbulenzeinlagen angebracht sein. Geeignete Strömungsleiteinrichtungen sind im Prinzip bekannt. Turbulenzeinlagen werden beispielsweise in AT 505300 gezeigt, tiefgezogene Rippen werden in AT 407920 und WO 93/00563 offenbart. Ebenso können tiefgezogene oder geprägte Noppen als Strömungsleiteinrichtung eingesetzt werden, was in DE 195 19 312 gezeigt ist. In dem beanspruchten Verfahren werden die Strömungswannen bereitgestellt.

Hierzu werden Bleche aus dem Material, meist Stähle wie zum Beispiel nichtrostender Stahl, tiefgezogen, gestanzt oder geprägt, um den umlaufenden Rand und gegebenenfalls die Strömungsleiteinrichtungen in der gewünschten Form anzubringen. Die Strömungsleiteinrichtungen können beispielsweise die Form von Rippen oder Noppen aufweisen, die durch Prägen oder Tiefziehen angebracht werden. Alternativ dazu können die Strömungsleiteinrichtungen auch separat bereitgestellt und zwischen den Böden der Strömungswannen eingelegt werden. Die Strömungsleiteinrichtungen sind jedoch nicht unbedingt erforderlich und können auch entfallen. In diesem Fall sind bei der in Figur 1b dargestellten Variante jedoch geeignete Maßnahmen zu ergreifen um einen Abstand zwischen den Wärmetauscherplatten sicher zu stellen. Dies kann beispielsweise dadurch erreicht werden, daß die Durchtrittsöffnungen für wärmetauschende Medien im Bereich von tiefgezogenen Ansätzen liegen, so daß diese Ansätze den Abstand zwischen den Wärmetauscherplatten bewirken.

Zur Herstellung des Plattenwärmetauschers wird Lotpaste auf die Strömungsleiteinrichtungen, die erhabenen Teile der Strömungswannen (wie zum Beispiel die oben erwähnten tiefgezogenen Ansätze, in deren Bereich die Durchtrittsöffnungen für wärmetauschende Medien liegen, oder Strömungsleiteinrichtungen) und deren Rand aufgetragen. Der Auftrag kann durch Tauchbeschichtung, Besprühen mit Lotpaste, durch Walzenauftrag ("Roller Coating") oder deren Kombinationen erfolgen. Ein geeignetes Verfahren zum Walzenauftrag ist beschrieben in EP 1714727.

Der Auftrag kann gleichzeitig oder sequentiell die Teile des Wärmetauschers, wie die Strömungsleiteinrichtungen, erhabener Teile der Strömungswannen und den Rand erfolgen, wobei das Auftragen von Lotpaste durch Walzenauftrag (Roller Coating) und / oder Tauchbeschichtung und/oder Besprühen mit Lotpaste erfolgen kann. So können bei einer sequentiellen Auftragsweise beispielsweise die Strömungsleiteinrichtungen und die tiefgezogenen Ansätze, in deren Bereich die Durchtrittsöffnungen für wärmetauschende Medien liegen, mittels Walzenauftrag mit Lotpaste versehen werden und der Rand in einem weiteren Schritt durch Tauchen. Zwischen beiden Schritten kann ein Trocknungsschritt ausgeführt werden, um ein Verschmieren der Lotpaste zu verhindern, dies ist je nach Vorgehensweise jedoch nicht unbedingt erforderlich. Für den Lotauftrag auf den Rand kann Besprühen mit Lotpaste mit Erfolg verwendet werden.

Die Lotpasten beider Schritte können gleich oder verschieden sein, wobei es vorteilhaft ist, wenn die Pasten an die spezifischen Gegebenheiten der jeweiligen Beschichtungsverfahren angepasst werden und somit verschieden sind. Im Allgemeinen enthalten geeignete Lotpasten 80 Gew.-% bis 95 Gew.-% oder 85 Gew.-% bis 90 Gew.-% des Lotpulvers, wobei für die Zwecke des beschriebenen Verfahrens besonders Eisenbasislote, Kupferbasislote und Nickelbasislote geeignet sind, was auch im Wesentlichen unlegiertes Eisen, Kupfer oder Nickel einschließt, die in Reinheiten von 99,95% oder 99,9% verwendbar sind. Geeignete Lote können gut als Pulver mit mittleren Korngrößen von kleiner als 150 µm, oder kleiner als 100 µm oder kleiner als 63 µm. bestimmt mittels statischer Lichtstreuung, eingesetzt. Der d90-Wert beträgt von etwa 80 µm bis etwa 30 µm, +- 7µm, oder von etwa 60 µm bis etwa 40 µm +- 7µm, beispielsweise 55 +- 7µm, bestimmt mittels statischer Lichtstreuung. Der D50-Wert beträgt von etwa 10 µm bis etwa 60 µm, oder von 30 µm bis etwa 45 µm, +- 7µm, beispielsweise 35 +- 7µm, bestimmt mittels statischer Lichtstreuung. Der D50-Wert kann in Sonderfällen auch von etwa 2,9 µm bis 20 µm betragen.

Geeignete Basislote umfassen die in der Norm DIN EN ISO 17672:2010 "Hartlöten-Lötzusätze" aufgeführten Materialien, aber auch sonstige Eisen-, Kupfer- und Nickelbasislote.

Geeignete Lote sind beispielsweise Cu86,5Cu₂O, CuA10,01P0,075, CuNi2,5-3,5Bi0,02-0,05, CuSn5,5-7,0P0,01-0,4, CuSn11-13P0,01-0,4, Ni60Cr30P6Si4, NiCo0,1Cr13-15Si4-5B2,75-3,5Fe4-5C0,06-0,09P0-0,02, NiCo0,1Cr13-15Si4-5B2,75-3,5Fe4-5C0-0,6P0-0,02, NiCo0,1Cr13,5-16,5B3,25-4Fe0-1,5C0-0,06P0-0,02, NiCo0,1Cr6-8Si4-5B2,75-3,5Fe2,5-3,5C0-0,06P0-0,02, NiCo0,1Si4-5B2,75-3,5Fe0-0,5C0-0,06P0-0,02, Ni-Co0,1Si3-4B1,5-2,2Fe0-1,5C0-0,06P0-0,02, NiCo0,1Cr18,5-19,5Si9,75-10,5B0-0,03,CO-0,06P0-0,02, NiCo0,1Cr21-23Si6-7B0-0,01C0-0,16P3,5-4,5, NiCo0,1Cr18,5-19,5Si7-7,5B1-1,5Fe0-0,5C0-0,1P0-0,02, NiCo1Cr14,5-15,5Si7-7,5B1,1-1,6Fe0-1C0-0,06P0-0,02, NiCo0,1Cr10-13Si3-4B2-3Fe2,5-4,5C0,4-0,55P0-0,02W15-17, NiCo0,1Cr9-11,75Si3,35-4,25B2,2-3,1Fe2,5-4C0,3-0,5P0-0,02W11,5-12,75, NiCo0,1C0-0,06P10-12, NiCo0,1Cr13-15Si0-0,1B0-0,02Fe0-0,2C0-0,06P9,7-10,5Mn0-0,04, NiCo0,1Cr24-26Si0-0,01B0-0,02Fe0-0,2C0-0,06P9-11. Die Pasten enthalten weiter Lösungsmittel in Mengen von 6 Gew.-% bis 16 Gew.-%, meist ein Gemisch von Kohlenwasserstoffen wie Petrolether, meist mit höheren Siedepunkten von 60°C bis 260°C, oder von 140°C bis 160°C.

Geeignete Pasten enthalten außerdem ein oder mehrere Polymere als Haftvermittler und Stabilisator in Mengen von 0,5 bis 1,5 Gew.-%. Für die Tauchbeschichtung geeignete Pasten enthalten meist weniger als 90 Gew.-% Lotpulver, bis zu 0,7 Gew.-% Polymer und 13 Gew.-% bis 16 Gew.-% Lösungsmittel, während für den Walzenauftrag geeignete Pasten meist mehr als 86 Gew.-% Lotpulver, mehr als 0,7 Gew.-%, insbesondere 0,7 Gew.-% bis 1,5 Gew.-% Polymer und 10 Gew.-% bis 13 Gew.-% Lösungsmittel.

In einer Ausgestaltung können Lotpasten verwendet werden, enthaltend eine oder mehrere als Lot geeignete Metallpulver, ein oder mehrere Copolymere, welche mindestens einen Styrol-Block und mindestens eine Block aus Ethylen, Propylen, Isopren, Butadien, deren hydrierten Äquivalenten oder deren Kombinationen aufweisen, und ein organisches Medium.

Die geeigneten Metallpulver sind oben aufgeführt und in DIN EN ISO 17672:2010 "Hartlöten-Lötzusätze" aufgeführt, aber auch sonstige Eisen-, Kupfer- und Nickelbasislote. Insbesondere handelt es sich hierbei um Hartlote, üblicherweise um Eisenbasislote, Nickelbasislote, Kupferbasislote, Silberbasislote und deren Kombinationen. Die Korngrößen und Korngrößenverteilungen können nach der gewünschten Anwendung ausgewählt werde. Oft werden Silber- Nickel- oder Kupferbasislote mit mittleren Korngrößen von kleiner als 150 µm, oder kleiner als 100 µm oder kleiner als 63 µm. bestimmt mittels statischer Lichtstreuung, eingesetzt. Der d90-Wert beträgt von etwa 80 µm bis etwa 30 µm, +- 7µm, oder von etwa 60 µm bis etwa 40 µm +- 7µm, beispielsweise 55 +- 7µm, bestimmt mittels statischer Lichtstreuung. Der D50-Wert beträgt von etwa 10 µm bis etwa 60 µm, oder von 30 µm bis etwa 45 µm, +- 7µm, beispielsweise 35 +- 7µm, bestimmt mittels statischer Lichtstreuung. Der D50-Wert kann in Sonderfällen auch von etwa 2,9 µm bis 20 µm betragen.

Das Metallpulver kann in dieser Ausführungsform in Mengen von etwa 70 Gew.-% bis etwa 96 Gew.-%, oder von etwa 80 Gew.-% bis etwa 95 Gew.-%, oder etwa 85 Gew.-% bis etwa 92 Gew.-% oder 87 Gew.-% bis etwa 91 Gew.-% eingesetzt.

Als weitere Komponente der Lotpaste wird ein Copolymer eingesetzt, welches mindestens einen Styrol-Block und mindestens eine Block aus Ethylen, Propylen, Isopren, Butadien, deren hydrierten Äquivalenten oder deren Kombinationen aufweist. Hierbei handelt es sich meist um Blockcopolymere.

Das Copolymer kann -je nach Anwendungsfall- in sehr geringen Mengen von weniger als 0,5 Gew.-% eingesetzt werden. Bewährt hat sich die Zugabe in Mengen von etwa 0,5 Gew.-% bis etwa 1,5 Gew.-%, oder etwa 0,6 Gew.-% bis etwa 1,2 Gew.-%, oder etwa 0,8 Gew.-% bis etwa 1,1 Gew.-%, oder etwa 0,9 Gew.-% bis etwa 1,0 Gew.-%. In einer weiteren Ausführungsform können auch mehr als 1,5 Gew.-% eingesetzt werden, wie von etwa 1,6 Gew.-% bis etwa 3,1 Gew.-%.

Diese Blockcopolymere, welche oft als TPS oder TPE-S bezeichnet werden, können normalerweise durch anionische Polymerisation erhalten werden. Sie weisen mindestens einen Block auf, welcher meist im Wesentlichen oder vollständig aus Polystyrol besteht. Außerdem weisen sie mindestens einen weiteren Block auf, der aus einem Gummi besteht, der in der Regel ausgewählt ist aus der Gruppe bestehend aus polymerisiertem Ethylen, Propylen, Isopren, Butadien, deren hydrierten Äquivalenten und deren Kombination. Prinzipiell können also Diblockcoplymere des Typs SB, Poly(Styrol-block-Butadien) oder SI, Poly(Styrol-block-Isopren) verwendet werden, ebenso wie deren hydrierte Äquivalente. Gut geeignet sind auch Triblockcopolymere des Typs SBS, Poly(Styrol-block-Butadien-block-Styrol) oder SIS, Poly(Styrol-block-Isopren-block-Styrol) und deren hydrierte Äquivalente. Durch Hydrierung werden die oben genannten Triblockcopolymere (SBS, SIS) umgewandelt in andere Blockcopolymere, bei Einsatz von SBS des Typs Styrol-Ethen/Buten-Styrol, welche auch als SEBS bekannt sind, oder bei Verwendung von SIS in Produkte des Typs Styrol-Ethen/Propen-Styrol, die auch als SEPS bekannt sind.

Die Blockcopolymere weisen die Strukturen der Formeln 1a und 1b auf, wobei die Indices a, b und c gleich oder verschieden sein können und die Länge der Blöcke darstellt. Viele kommerziell erhältliche Materialien besitzen die Struktur 1a (SB, SI) oder 1b (SBS, SIS, SEBS, SEPS). "Block" ist der Block, welcher aus einem Gummi gebildet ist, also zum Beispiel Polyisopren oder Polybutadien. Verbreitete Strukturen, die der Block oft aufweisen kann, sind in den Formeln 2 bis 5 angegeben. Die abgebildeten Polystyrolblöcke wechseln sich mit den Blöcken aus Gummi ab. 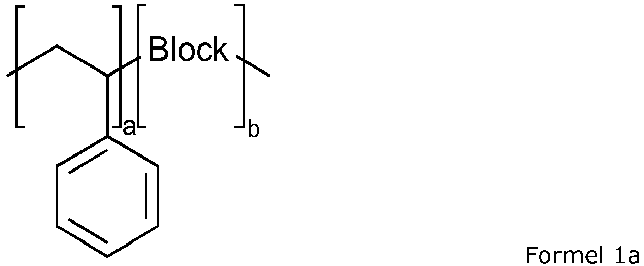 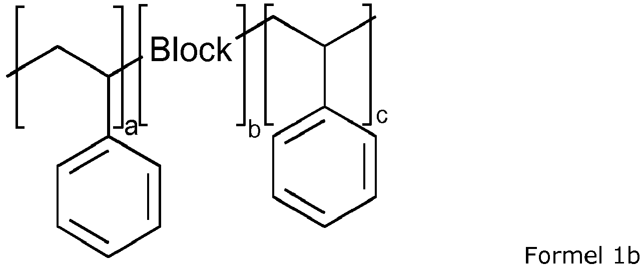 Block =

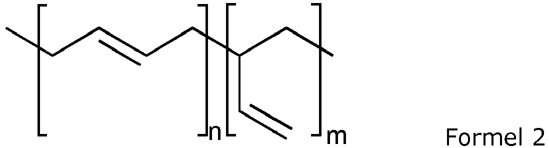

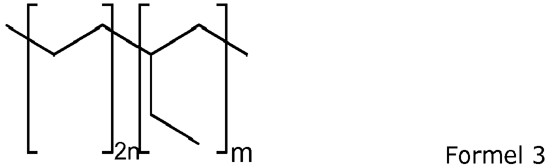

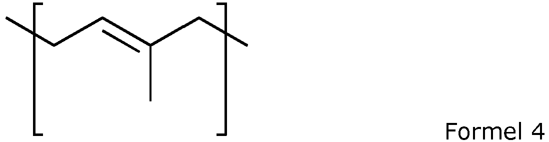

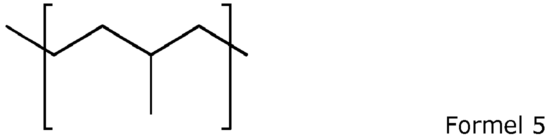

Wird der "Block" in Formel 1a ersetzt durch Formel 2, so wird Poly(styrol-block-butadien), SB erhalten.

Wird der "Block" in Formel 1b ersetzt durch Formel 2, so wird Poly(styrol-block-butadien-block-styrol), SBS erhalten. Wird dieses Polymer hydriert, so erhält man SEBS, dessen Struktur der Formel 1b entspricht, wobei der "Block" in Formel 1 ersetzt ist durch Formel 3. Bei den angegebenen Formeln für SEBS bzw. SBS zeigen die Indices n und m die unterschiedlichen Anteile an 1,4-verknüpftem und 1,2-verknüpftem Butadien. Die Ziffern n und m können gleich oder verschieden sein. Das Verhältnis von n und m zueinander zeigt das Verhältnis zwischen 1,2- und 1,4-Verknüpfung an und kann bei der Wahl der Herstellungsbedingungen kontrolliert werden.

Wird der "Block" in Formel 1a ersetzt durch Formel 4, so wird Poly(styrol-block-isopren), SI erhalten. Wird der "Block" in Formel 1b ersetzt durch Formel 4, so wird Poly(styrol-block-isopren-block-styrol), SIS, erhalten. Wird dieses Polymer hydriert, so erhält man SEPS, dessen Struktur der Formel 1b entspricht, wobei der "Block" in Formel 1b ersetzt ist durch Formel 5. Spezifischer ist die Struktur von SEPS in Formel 6 dargestellt.

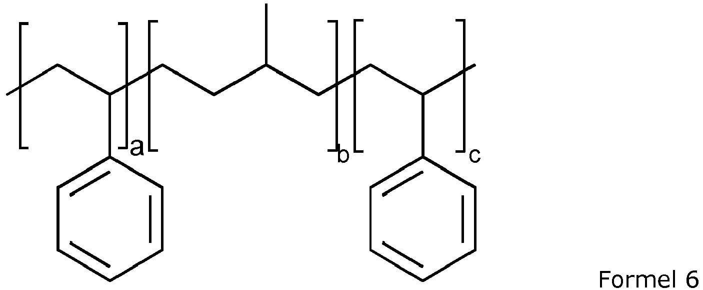

Gut geeignet als Bestandteil der Lotpaste ist beispielsweise SEPS mit einem Verhältnis von Styrol zu Isopren von etwa 1:2 bis etwa 1:6, oder von etwa 1:3 bis etwa 1:5, oder von etwa 1:4 bis etwa 1:5,5. Das Verhältnis von Styrol zu Isopren wird aus der Strukturformel bestimmt durch das Verhältnis der Summe von a und c (Styrolblöcke) zu b (hydrierte Isoprenblöcke). Aus dem Polymer kann das Verhältnis durch Kernresonanzspektrometrie bestimmt werden. Gut geeignet sind Copolymere, die ein Gewichtsmittel M_{w} von 60000 g/mol bis 90000 g/mol, oder von 70000 g/mol bis 80000 g/mol aufweisen. Gut geeignet sind Copolymere, die ein Zahlenmittel Mₙ von 60000 g/mol bis 90000 g/mol, oder von 70000 g/mol bis 80000 g/mol aufweisen. Gut geeignet sind Copolymere, die eine Polydispersität Q im Bereich von 1,01 bis 1,05 aufweisen.

Als dritte Komponente c) weist die Lotpaste ein organisches Medium auf. Im Prinzip können alle geeigneten organischen Lösemittel verwendet werden, welche bei den Löttemperaturen im Wesentlichen rückstandslos verdampfen oder verbrennen. Hierbei sind Lösemittel besonders geeignet, die keine übermäßige Rußentwicklung zeigen, beispielsweise Aceton, Ether oder Kohlenwasserstoffe bzw. Kohlenwasserstoffgemische, welche bei Raumtemperatur flüssig sind. Im Allgemeinen wird diese Bedingung von Kohlenwasserstoffen erfüllt, welche 10 bis 15 Kohlenstoffatome aufweisen. Der Kohlenwasserstoff kann mindestens ein Isoalkan mit 10 bis 15 Kohlenstoffatomen enthalten. Ungesättigte Verbindungen und Aromaten neigen dabei stärker zur Rußentwicklung. Im Allgemeinen gut geeignet als organisches Medium sind Alkane und Gemische von Alkanen, zum Beispiel Gemische von Alkanen, die im Wesentlichen 10 bis 15 Kohlenstoffatome aufweisen. Dies können auch Gemische aus n-Alkanen, Isoalkanen und Cycloalkanen sein, oder Gemische aus n-Alkanen, iso-Alkanen und cyclischen Verbindungen, oder iso-Alkane. So sind beispielsweise iso-Alkane mit 11 bis 13 Kohlenstoffatomen, oder Gemische aus n-Alkanen, iso-Alkanen und cyclischen Verbindungen mit im Wesentlichen 11 bis 14 Kohlenstoffatomen gut geeignet. Diese können auch eingesetzt werden, wenn sie weniger als 2 Gew.-% Aromaten enthalten. Beispielsweise können auch die Kohlenwasserstoffe eingesetzt werden, welche als Petrolether 40-60 oder Petrolether 60-80 bezeichnet werden. Abhängig von der für eine bestimmte Anwendung benötigten Viskosität ist das organische Medium in Mengen von etwa 4 Gew.-% bis etwa 20 Gew.-%, oder von etwa 5 Gew.-% bis etwa 15 Gew.-%, oder von etwa 6 Gew.-% bis etwa 14, 4 Gew.-%, oder von etwa 6,5 Gew.-% bis etwa 13, 3 Gew.-%, oder von etwa 7 Gew.-% bis etwa 11,7 Gew.-% in der Lotpaste enthalten.

Die Lotpaste kann auch weitere Bestandteile enthalten. So kann die Lotpaste auch bis zu 2,7 Gew.-% eines weiteren Polymeren enthalten, welches von der Komponente b) verschieden ist. Für diesen Zweck gut geeignet sind im Allgemeinen Acrylate, wie Polymethylmethacrylat, Polymethylacrylat, Polyethylmetacrylat, Polyethylacrylat und dergleichen. Ebenso können EPDM, Polysiopren , Polyisobutylen, ganz oder teilweise hydrierte Kohlenwasserstoffharze oder Polyolefine wie Polyethylen eingesetzt werden. Diese Materialien zeigen oft auch in Mengen von einem Gew.-% oder weniger eine Wirkung. Es kann also beispielsweise etwa 0,4 Gew.-% bis 1 Gew.-%, oder von etwa 0,6 Gew.-% bis etwa 0,9 Gew.-% von Materialien wie Polyisobutylen eingesetzt werden. Statt Polyisobutylen können auch Polyisopren, EPDM oder die übrigen oben genannten Polymere eingesetzt werden, gegebenenfalls auch in Kombination mit Polyisobutylen oder miteinander. Durch den Zusatz des zweiten Polymers können Eigenschaften der Lotpaste modifiziert werden, wie zum Beispiel die Adhäsion zu bestimmten Substraten, Viskosität oder Ausbrennverhalten.

Außerdem kann die Lotpaste noch weitere Zusatz- und Hilfsstoffe enthalten um die Eigenschaften für bestimmte Anwendungen zu modifizieren. Beispielsweise können Oxidationsmittel zugesetzt werden, um das Abbrandverhalten zu verbessern. Für den gleichen Zweck können auch nichtflüchtige, sauerstoffhaltige Verbindungen eingesetzt werden, wie beispielsweise nichtflüchtige organische Oxide und Peroxide, oder Polyether. Auch Thixotropiermittel können zugesetzt werden, um die Viskosität der Lotpaste in weiten Grenzen zu regulieren.

Die Lotpaste kann außerdem ein oder mehrere Flußmittel enthalten. Dies sind oft Bor oder Fluor basierende Verbindungen, welche einzeln oder in Mischungen der Lotpaste zugesetzt werden können.

Eine solche Lotpaste kann erhalten werden durch die übliche Herstellungsweise für Lotpasten. Hierzu wird das organische Medium in einem Behälter vorgelegt, auf eine Temperatur von beispielsweise etwa 20°C bis etwa 100°C, oder etwa 30°C bis etwa 80°C, oder etwa 40°C bis etwa 60°C, oder etwa 40°C bis etwa 50°C, oder etwa 60°C bis etwa 80°C gebracht und gehalten und unter Rühren nacheinander das Copolymer, weitere Zusatzstoffe und das Lotpulver zugegeben. Für das Einrühren des Copolymers und der Zusatzstoffe sind je nach Ansatzgröße meist Rührzeiten von einer Stunde bis einem Tag, insbesondere 12 bis 24 Stunden ausreichend. Die Lotpaste kann aber auch in mehrstufigen Verfahren erhalten werden. Beispielsweise kann das Einrühren des Copolymers und der Zusatzstoffe wie oben beschrieben erfolgen, die Zugabe des Lotpulvers später erfolgen, um die Lagerzeit zu verringern und die Haltbarkeit der Lotpaste zu erhöhen. Die Zugabe des Metallpulvers kann -gegebenenfalls unter Heizen oder Kühlen- bei etwa 10°C bis etwa 100°C erfolgen. Anschließend ist die Lotpaste bereit für Verpackung oder Verarbeitung.

Durch Trocknung dieser Lotpaste entstehen Strömungswannen und/ oder Strömungsleiteinrichtungen, welche eine teilweise oder vollständige Schicht enthaltend
a) eine oder mehrere als Lot geeignete Metallpulver;
b) ein oder mehrere Copolymere, welche mindestens einen Styrol-Block und mindestens eine Block aus Ethylen, Propylen, Isopren, Butadien, deren hydrierten Äquivalenten oder deren Kombinationen
aufweist. Gegebenenfalls kann diese Schicht auch ein weiteres Polymer enthalten, welches von dem Copolymer verschieden ist, oder auch sonstige Zusatz- und Hilfsstoffe, wie beispielsweise Thixotropiermittel oder Flußmittel.

In einer anderen Ausführung kann der Pastenauftrag auch gleichzeitig, also in einem Schritt, erfolgen. Hierbei kann dann jedoch nur nach einer Beschichtungsmethode vorgegangen werden, also zum Beispiel Tauchbeschichtung oder Walzenauftrag. Hierbei werden alle erhabenen Teile der Strömungswannen, also auch der Rand, gleichzeitig durch Walzenauftrag oder Tauchen beschichtet. Hierbei ist es von Vorteil, wenn diese erhabenen Teile keine allzu unterschiedliche Höhe aufweisen, um eine unnötige, übermäßige Beschichtung der höheren Teile zu vermeiden.

Als sequentieller Auftrag der Lotpaste ist es auch anzusehen, wenn die Strömungswanne wie oben beschreiben einer gleichzeitigen Beschichtung unterworfen und separate Strömungsleiteinrichtung gesondert mit Lotpaste beschichtet und zum Zusammenbau des Plattenwärmetauschers in die Strömungswannen eingelegt werden.

Nach der Beschichtung mit Lotpaste und gegebenenfalls nach dem Trocknen der Lotpaste werden die Strömungswannen zur Montage des Plattenwärmetauschers ineinander bzw. aufeinander gestapelt. Die beloteten, gestapelten Strömungswannen werden dann zum Verlöten einer geeigneten Wärmebehandlung unterworfen, die zu einer Entbinderung der Lötpaste und dem Verlöten der Strömungswannen zum Plattenwärmetauscher führt. Dieser Schritt kann in an sich bekannten, für die Lötung geeigneten Vorrichtungen, wie beispielsweise Durchlauföfen oder Vakuumöfen, durchgeführt werden. Oft ist eine Lötung im Vakuum oder unter Schutzgas wie Stickstoff, Wasserstoff oder deren Mischungen empfehlenswert.

Die Strömungswannen zur Herstellung des Plattenwärmetauschers können in einer Ausführung der Erfindung im Wesentlichen wannenförmig ausgestaltet sein und ineinander gestapelt werden, wie in Figur 1a abgebildet. Bei dieser Vorgehensweise ist eine sequentielle Belotung der Strömungswannen von Vorteil. Hierbei können die erhabenen Teile der Strömungswannen durch Walzenauftrag beschichtet werden. Wird die Lotpaste anschließend getrocknet können die lotbeschichteten Strömungswannen bis zur Weiterverarbeitung gelagert werden.

In einer spezifischen Variante dieser Ausführung wird der Rand zunächst nicht belotet, die mit Lotpaste versehenen Strömungswannen getrocknet und erst in einem weiteren Schritt durch Tauchen mit Lotpaste versehen. Die Strömungswannen können dann zur Montage in noch feuchtem Zustand ineinandergestapelt und der Wärmebehandlung unterworfen werden, wobei die Wärmebehandlung der Trocknung noch feuchter Lotpaste, der Entbinderung und dem Verlöten dient. In dieser Variante wird also das Ineinanderstapeln der Strömungswannen zu einem Zeitpunkt vorgenommen, an welchem die am umlaufenden Rand durch Tauchen aufgebrachte Lotpaste nicht getrocknet ist, während die mit Lotpaste versehenen Strömungswannen nach dem Walzenauftrag der Lotpaste und vor eine Weiterverarbeitung getrocknet sind.

In einer anderen Ausführung des Verfahrens können die Strömungswannen abwechselnd über den Rand und über erhabene Teile der Strömungswannen miteinander verbunden sein, wie in Figur 1b abgebildet. Bei dieser Ausführung ist eine Variante möglich, bei welcher die erhabenen Teile der Strömungswannen die gleiche Höhe besitzen. Hier können die erhabenen Teile der Strömungswannen bequem in einem Schritt mit Lotpaste beschichtet werden. Dies kann vorteilhaft durch Walzenauftrag, gegebenenfalls gleichzeitig auf Ober- und Unterseite der Strömungswannen, erfolgen, wobei aber auch eine Beschichtung durch Tauchen möglich ist. Auch in dieser Ausführungsform ist es möglich, die mit Lotpaste versehenen Strömungswannen nach dem Walzenauftrag der Lotpaste zu trocknen, bevor eine Weiterverarbeitung erfolgt.

Als Lotpasten können insbesondere Pasten auf Basis von Eisen-, Kupfer-oder Nickelbasislot eingesetzt werden. Die Lotpasten für Tauch- und Walzenauftrag können gleich oder verschieden sein.

Die Wärmebehandlung kann in mehreren Temperaturstufen durchgeführt werden, um Trocknung, Entbinderung und Verlötung der Lotpaste zu definierten Zeitpunkten durchzuführen. Die Löttemperatur liegt meist 50 °C über der Liquidustemperatur der jeweiligen Lotlegierung. In Batchöfen (Vakuum- oder Schutzgas) kann eine Haltestufe bei ca. 30 - 50 °C unterhalb der Solidustemperatur der jeweiligen Lotlegierung gesetzt werden um eine homogene Durchwärmung vor dem Verflüssigen des Lotes zu erzielen.

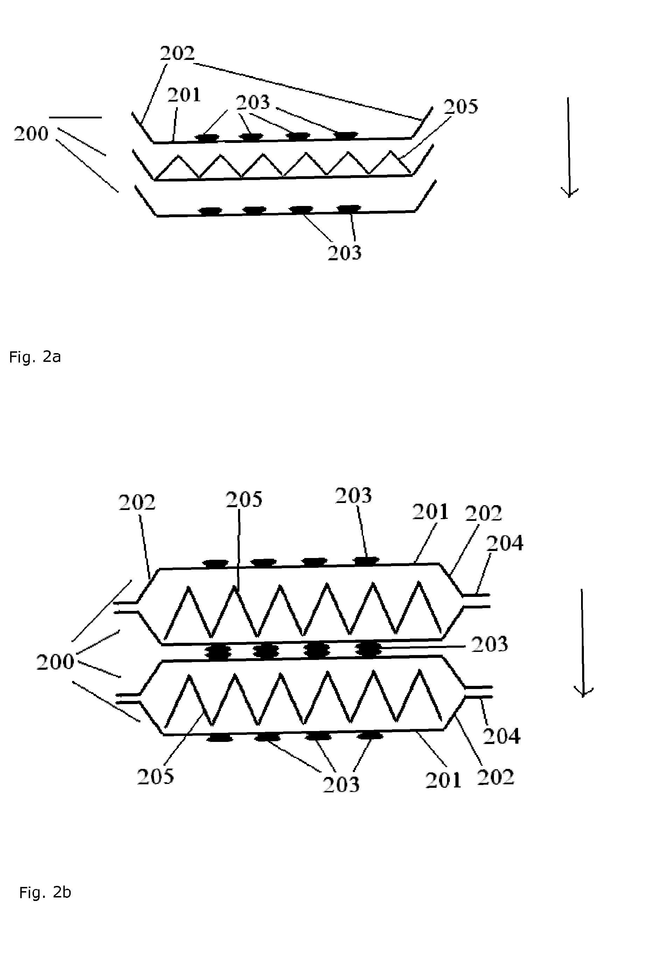

In einer weiteren Ausführungsform der Erfindung werden die Strömungsleiteinrichtungen abwechselnd in die Strömungswannen eingelegt und über erhabene Teile der Strömungswannen gebildet. Diese Ausführungsform ist in Figuren 2a und 2b schematisch dargestellt. Figur 2a zeigt Strömungswannen 200, die ineinander gestapelt werden und einen Boden 201 sowie einen umlaufenden Rand 202 aufweisen. Die Strömungswannen 200 weisen Strömungsleiteinrichtungen 203 auf, welche über erhabene Teile der Strömungswannen 200 gebildet werden, wobei jedoch zwischen zwei derartigen Strömungswannen ein angeordnet ist, in welche eine separate Strömungsleiteinrichtung 205 eingelegt ist.

Figur 2a zeigt Strömungswannen 200, die einen Boden 201, einen umlaufenden Rand 202, der in einem Winkel zur Fläche des Bodens 201 angeordnet ist und einen Teilbereich 204 aufweisen, der parallel zur Fläche des Bodens 201 angeordnet ist.

Diese Ausführung erlaubt ein Aufeinandersetzen der Strömungswannen 200 derart, daß die Böden der Strömungswannen 201 voneinander abgewandt und nicht ineinander gestapelt sind. Zwischen den miteinander verbundenen Wärmetauscherplatten 201 befinden sich die Strömungsleiteinrichtungen 203, über welche die Wärmetauscherplatten 201 miteinander verbunden sind. Zwischen den Strömungswannen 200, welche über den parallel zur Fläche des Bodens 201 angeordneten Teilbereich des umlaufenden Randes 204 miteinander verbunden sind, sind separate Strömungsleiteinrichtungen 205 eingelegt. Hierdurch wird der Fluß unterschiedlicher wärmetauschender Medien durch verschiedene Strömungsleiteinrichtungen kontrolliert.

Eine spezifische Ausführungsform betrifft ein Verfahren zur Herstellung von Plattenwärmetauschern mit mehreren ineinander gestapelten Strömungswannen, wobei jede Strömungswanne einen umlaufenden Rand und einen Boden aufweist, im Wesentlichen wannenförmig gestaltet ist, benachbarte Platten jeweils über die umlaufenden Ränder verbunden sind und die Böden der Strömungswannen als Wärmetauscherplatten abwechselnd jeweils einen Durchflußraum für ein erstes und ein zweites (wärmetauschendes) Medium aufspannen, und zwischen den Wärmetauscherplatten Strömungsleiteinrichtungen angeordnet sind, enthaltend die Schritte
- Bereitstellen der Strömungswannen;
- Gleichzeitiges oder sequentielles Auftragen von Lotpaste auf die Strömungsleiteinrichtungen und erhabener Teile der Strömungswannen durch Walzenauftrag (Roller Coating);
- Auftragen von Lotpaste auf zumindest einen Teil des umlaufenden Randes durch Tauchbeschichtung oder Besprühen mit Lotpaste;
- Gegebenenfalls Einlegen von Strömungsleiteinrichtungen in Strömungswannen;
- Ineinanderstapeln der Strömungswannen;
- Wärmebehandlung der beloteten, ineinander gestapelten Strömungswannen zum Verlöten der Strömungswannen.

Die Reihenfolge der Schritte des gleichzeitigen oder sequentiellen Auftrags von Lotpaste auf die Strömungsleiteinrichtungen und erhabener Teile der Strömungswannen durch Walzenauftrag (Roller Coating) und des Auftragens von Lotpaste auf zumindest einen Teil des umlaufenden Randes durch Tauchbeschichtung oder Besprühen mit Lotpaste kann auch in umgekehrter Reihenfolge durchgeführt werden.

Diese Vorgehensweise ist gut zur Herstellung von gehäuselosen Plattenwärmetauschern geeignet, welche zum Beispiel in DE 195 19312 gezeigt werden. In einer spezifischen Ausgestaltung dieser Ausführungsform des Verfahrens werden die Strömungsleiteinrichtungen, die Strömungswannen oder beide nach dem Walzenauftrag von Lotpaste vor der Weiterverarbeitung getrocknet.

In einer weiteren spezifischen Ausgestaltung dieser Ausführungsform des Verfahrens wird das Ineinanderstapeln der Strömungswannen zu einem Zeitpunkt vorgenommen, an welchem die am umlaufenden Rand durch Tauchen aufgebrachte Lotpaste noch nicht getrocknet, also feucht ist. Dies kann die Verarbeitung erleichtern, da keine getrocknete Lötpaste die Stapelung beeinträchtigt und durch die Benetzung beider zu verlötender Teile mit Lotpaste die Qualität der Verlötung verbessert werden kann.

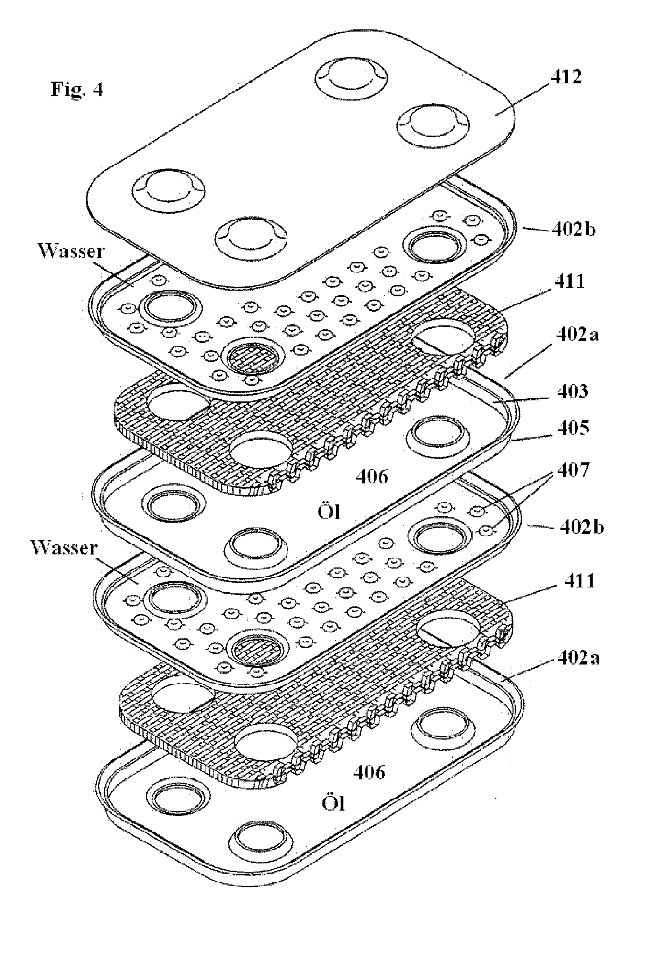

In einer weiteren spezifischen Ausgestaltung dieser Ausführungsform werden die Strömungsleiteinrichtungen in abwechselnden Strömungswannen eingelegt und über erhabene Teile der Strömungswannen gebildet, wie in Fig. 4 dargestellt.

### Beispiele

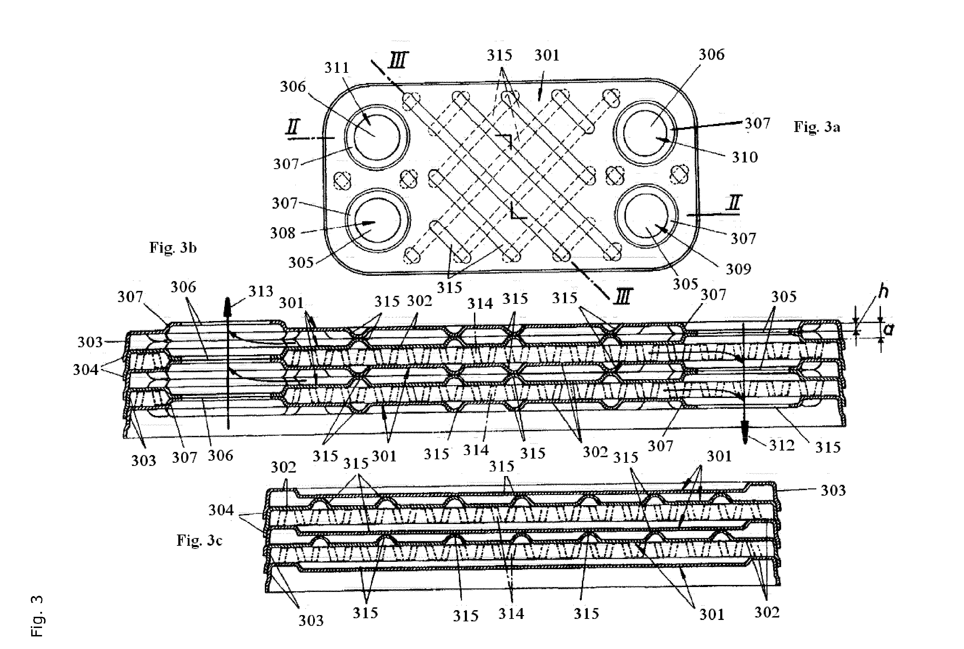

Der in Figur 3a gezeigte Plattenwärmetauscher wird aus einzelnen, ineinandergesteckten Strömungswannen 301 aufgebaut, die jeweils aus einem Boden 302 mit einem hochgezogenen, umlaufenden Rand 303 gebildet werden, der mit einer Erweiterung 304 den Rand 303 des Bodens 302 der jeweils benachbarten Strömungswanne 301 übergreift. Diese Wannenböden 302 weisen einander paarweise zugeordnete Durchtrittsöffnungen 305 und 306 für die wärmetauschenden Medien, beispielsweise Öl und Wasser, auf. Die Anordnung ist dabei so getroffen, dass die Durchtrittsöffnungen 305 und 306 im Bereich von tiefgezogenen Ansätzen 307 liegen, deren Höhe dem halben Abstand a zwischen den benachbarten Wannenböden 302 entspricht. Da die Durchtrittsöffnungen 305 und 306 kleiner als der Boden dieser Ansätze 307 sind, ergibt sich zwischen den Böden der gegeneinander vorragenden Ansätze 307 benachbarter Wärmetauscherplatten 302 eine die dichte Verbindung der Ansätze 307 unterstützende flächige Anlage um den jeweiligen Öffnungsrand. Wie Fig. 3b entnommen werden kann, sind die Ansätze 307 im Bereich fluchtender Durchtrittsöffnungen 305 und 306 abwechselnd auf entgegengesetzten Plattenseiten vorgesehen, so dass sich über die Ansätze 307 jeweils ein flüssigkeitsdichter Durchtritt durch jede zweite Strömungswanne 301 ergibt Zusätzlich müssen die Ansätze 307 für den Durchtritt des einen Mediums gegenüber den Ansätzen 307 für den Durchtritt des anderen Mediums auf gegenüberliegenden Plattenseiten liegen.

Wird beispielsweise das zu kühlende erste wärmetauschende Medium durch die Durchtrittsöffnungen 305 und das die Wärme des ersten wärmetauschenden Mediums aufnehmende zweite wärmetauschende Medium durch die Durchtrittsöffnungen 306 geleitet, wobei das erste wärmetauschende Medium jeweils vom Zulauf 308 zum Ablauf 309 und das zweite wärmetauschende Medium im Gegenstrom vom Zulauf 310 zum Ablauf 311 die Strömungswannen 301 durchströmen, so ergibt sich für das erste wärmetauschende Medium eine durch die Pfeile 312 und für das zweite wärmetauschende Medium eine durch die Pfeile 313 in der Fig. 3b angedeutete Strömung, die hinsichtlich ihrer Verteilung über die Wärmetauscherplatten von der Anordnung entsprechender Leiteinrichtungen in den einzelnen Strömungswannen 301 abhängt. Während für die Strömung des ersten wärmetauschenden Mediums Turbulenzeinlagen 314 eingesetzt werden, wird die Leiteinrichtung in den dazwischenliegenden Strömungswannen 301 durch tiefgezogene Rippen 315 in den Wannenböden 302 gebildet. Die Anordnung ist dabei so getroffen, daß die parallelen Rippen 315 der einen Strömungswanne 301 die Schar der ebenfalls parallelen Rippe 315 der unmittelbar anschliessenden Strömungswanne unter einem Winkel von 90° kreuzen, wie dies der Fig. 3a entnommen werden kann. Da die Rippen 315 jeweils in den Strömungsweg für das zweite wärmetauschende Medium vorragen und eine Höhe h aufweisen, die dem halben Abstand a der Wannenböden 302 entspricht, liegen die gegeneinander vorragenden Rippen 315 im Bereich der Kreuzungsstellen aneinander an. Dies bringt im Zusammenhang mit dem durchgehenden Rippenverlauf zwischen den Kreuzungsstellen eine vorteilhafte Durchwirbelung des zweiten wärmetauschenden Mediums mit sich. Durch die Rippen 315 wird außerdem die Oberfläche der Wärmetauscherplatte vergrößert, so dass insgesamt vorteilhafte Wärmeaustauschbedingungen sichergestellt werden können.

Figur 4 zeigt eine Explosionszeichnung eines gehäuselosen Plattenwärmetauschers, wobei für unterschiedliche wärmetauschende Medien (hier Wasser und Öl genannt) unterschiedliche Strömungsleiteinrichtungen eingesetzt wurden, nämlich tiefgezogene Noppen für das Wasser und eine Turbulenzeinlage für das Öl. Der gehäuselose Plattenwärmetauscher weist eine Wärmetauscherplatte 402a für die Ölseite auf, der gleichzeitig die nicht dargestellten Anschlussflansche für die Medien aufnimmt. Es sind in der Reihenfolge - Turbulenzeinlage 411, Wärmetauscherplatte 402b mit Noppen 407 für die Wasserseite, eine weitere Wärmetauscherplatte 402a mit Turbulenzeinlage 411, eine nächste Wärmetauscherplatte 402b und ein oberes Deckblech 412 angeordnet. Je nach geforderter Kühlleistung können weitere der gezeigten Elemente zur Herstellung des Plattenwärmetauschers eingesetzt werden, die wie beschrieben angeordnet sind.

## Patentansprüche

1. Verfahren zur Herstellung von Plattenwärmetauschern mit mehreren gestapelten Strömungswannen, wobei jede Strömungswanne einen umlaufenden Rand und einen Boden aufweist, benachbarte Platten zumindest teilweise miteinander verbunden sind, die Platten durch Löten miteinander verbunden werden und die Böden der Strömungswannen als Wärmetauscherplatten abwechselnd jeweils einen Durchflußraum für ein erstes und ein zweites Medium aufspannen, und wobei zwischen den Wärmetauscherplatten Strömungsleiteinrichtungen angeordnet sind, wobei nur die jeweils miteinander zu verbindenden Teile der Strömungswannen mit Lot versehen sind, insbesondere mit einer Lotpaste.

2. Verfahren nach Anspruch 1 zur Herstellung von Plattenwärmetauschern mit mehreren gestapelten Strömungswannen, wobei jede Strömungswanne einen umlaufenden Rand und einen Boden aufweist, benachbarte Platten zumindest teilweise miteinander verbunden sind und die Böden der Strömungswannen als Wärmetauscherplatten abwechselnd jeweils einen Durchflußraum für ein erstes und ein zweites Medium aufspannen, und zwischen den Wärmetauscherplatten Strömungsleiteinrichtungen angeordnet sind, enthaltend die Schritte
- Bereitstellen der Strömungswannen;
- Gleichzeitiges oder sequentielles Auftragen von Lotpaste auf die Strömungsleiteinrichtungen, erhabener Teile der Strömungswannen und den Rand durch Walzenauftrag, Tauchbeschichtung, Besprühen mit Lotpaste oder deren Kombinationen;
- Gegebenenfalls Einlegen der Strömungsleiteinrichtungen in Strömungswannen;
- Stapeln der Strömungswannen;
- Wärmebehandlung der beloteten, gestapelten Strömungswannen zum Verlöten der Strömungswannen.

3. Verfahren nach Anspruch 1 oder 2, wobei die Strömungswannen im Wesentlichen wannenförmig gestaltet sind und ineinander gestapelt werden.

4. Verfahren nach Anspruch 1, 2 oder 3, wobei die Strömungswannen abwechselnd über den Rand und über erhabene Teile der Strömungswannen miteinander verbunden sind.

5. Verfahren nach Anspruch 2 oder 4, wobei die Strömungsleiteinrichtungen abwechselnd eingelegt und über erhabene Teile der Strömungswannen gebildet werden.

6. Verfahren nach einem oder mehreren der Ansprüche 1 bis 4, wobei der Auftrag von Lotpaste auf die erhabenen Teile der Strömungswannen und/oder die Strömungsleiteinrichtungen durch Walzenauftrag mit Lotpaste, der Auftrag von Lotpaste auf den Rand durch Tauchbeschichten oder Besprühen mit Lotpaste erfolgt.

7. Verfahren nach Anspruch 1 oder 2 zur Herstellung von Plattenwärmetauschern mit mehreren ineinander gestapelten Strömungswannen, wobei jede Strömungswanne einen umlaufenden Rand und einen Boden aufweist, im Wesentlichen wannenförmig gestaltet ist, benachbarte Platten jeweils über die umlaufenden Ränder verbunden sind und die Böden der Strömungswannen als Wärmetauscherplatten abwechselnd jeweils einen Durchflußraum für ein erstes und ein zweites Medium aufspannen, und zwischen den Wärmetauscherplatten Strömungsleiteinrichtungen angeordnet sind, enthaltend die Schritte
- Bereitstellen der Strömungswannen;
- Gleichzeitiges oder sequentielles Auftragen von Lotpaste auf die Strömungsleiteinrichtungen und erhabener Teile der Strömungswannen durch Walzenauftrag (Roller Coating);
- Auftragen von Lotpaste auf zumindest einen Teil des umlaufenden Randes durch Tauchbeschichtung oder Besprühen mit Lotpaste;
- Gegebenenfalls Einlegen von Strömungsleiteinrichtungen in Strömungswannen;
- Ineinanderstapeln der Strömungswannen;
- Wärmebehandlung der beloteten, ineinander gestapelten Strömungswannen zum Verlöten der Strömungswannen.

8. Verfahren zur Herstellung von Plattenwärmetauschern nach Anspruch1 oder 2 mit mehreren gestapelten Strömungswannen, wobei jede Strömungswanne einen umlaufenden Rand und einen Boden aufweist, benachbarte Platten zumindest teilweise miteinander verbunden sind und die Böden der Strömungswannen als Wärmetauscherplatten abwechselnd jeweils einen Durchflußraum für ein erstes und ein zweites Medium aufspannen, und zwischen den Wärmetauscherplatten Strömungsleiteinrichtungen angeordnet sind, enthaltend die Schritte
- Bereitstellen der Strömungswannen, die je einen Boden, umlaufenden Rand, der in einem Winkel zur Fläche des Bodens angeordnet ist und einen Teilbereich aufweist, der parallel zur Fläche des Bodens angeordnet ist;
- Gleichzeitiges oder sequentielles Auftragen von Lotpaste auf die Strömungsleiteinrichtungen, erhabener Teile der Strömungswannen und den Rand durch Walzenauftrag, Tauchbeschichtung, Besprühen mit Lotpaste oder deren Kombinationen;
- Gegebenenfalls Einlegen der Strömungsleiteinrichtungen in Strömungswannen;
- Stapeln der Strömungswannen durch Aufeinandersetzen, so daß die Teilbereiche der Böden, die parallel zur Fläche des Bodens angeordnet sind, aufeinander gesetzt werden und die Außenseiten der Böden der so verbundenen Strömungswannen voneinander abgewandt sind;
- Wärmebehandlung der beloteten, gestapelten Strömungswannen zum Verlöten der Strömungswannen.

9. Verfahren nach einem oder mehreren der Ansprüche 1 bis 8, wobei die Strömungsleiteinrichtungen und/oder die erhabenen Teile der Strömungswannen nach dem Walzenauftrag von Lotpaste vor der Weiterverarbeitung getrocknet werden.

10. Plattenwärmetauscher, erhältlich nach einem Verfahren nach einem oder mehreren der Ansprüche 1 bis 9.
